(19) Europäisches Patentamt / European Patent Office / Office européen des brevets

(11) **EP 2 060 943 B1**

(12) **FASCICULE DE BREVET EUROPEEN**

(45) Date de publication et mention
de la délivrance du brevet:
**11.05.2011 Bulletin 2011/19**

(51) Int Cl.:
*G02B 13/16* *(2006.01)*  *G02B 13/14* *(2006.01)*
*G02B 1/00* *(2006.01)*  *G02B 27/10* *(2006.01)*

(21) Numéro de dépôt: **08168058.9**

(22) Date de dépôt: **31.10.2008**

(54) **Système optique multi-spectral grand champ**

Optisches Multispektral-Großfeld-System

Large-field multi-spectral optical system

(84) Etats contractants désignés:
**DE ES GB**

(30) Priorité: **13.11.2007 FR 0707963**

(43) Date de publication de la demande:
**20.05.2009 Bulletin 2009/21**

(73) Titulaire: **THALES**
**92200 Neuilly-sur-Seine (FR)**

(72) Inventeur: **Rollin, Joël**
**42580 L'Etrat (FR)**

(74) Mandataire: **Henriot, Marie-Pierre et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
US-A- 4 871 219    US-A1- 2003 007 203
US-A1- 2003 214 729    US-A1- 2005 200 946

• SEZNEC ET AL: "Preparation and luminescence
of new Nd<3+> doped chloro-sulphide glassceramics" OPTICAL MATERIALS, ELSEVIER
SCIENCE PUBLISHERS B.V. AMSTERDAM, NL,
vol. 29, no. 4, 10 novembre 2006 (2006-11-10),
pages 371-376, XP005757775 ISSN: 0925-3467

**Description**

Le domaine de l'invention est celui des systèmes optiques multi-spectraux grand champ, aptes à fonctionner plus spécialement dans les bandes spectrales visible et proche infrarouge (0,4 $\mu$m-1,1 $\mu$m), infrarouge moyen, bande II (3 $\mu$m- 5 $\mu$m) et infrarouge lointain, bande III (8 $\mu$m-12 $\mu$m).

Ces systèmes sont notamment utilisés dans des équipements optiques portables, et permettent de coupler par exemple une imagerie thermique à une voie comprenant un tube à intensification de lumière désigné tube IL. Les images visibles/IR, telles que celles fournies par un tube IL et celles fournies par un détecteur IR lointain (8-12 $\mu$m) donnent des informations complémentaires. La voie IL, grand champ (de 30 à 60°) aide au déplacement de nuit, tandis que la voie thermique permet le décamouflage de cibles chaudes, cachées par exemple dans la végétation.

Généralement, ces systèmes comportent deux canaux d'entrée dissociés, respectivement dédiés à chaque bande spectrale : les encombrements, les masses des matériels s'en trouvent donc pénalisés. De plus, lors des visées à distance rapprochée, il y a un phénomène de dédoublement d'image, la parallaxe, lié au décalage entre les axes optiques des canaux d'entrée. Pour échapper à ces inconvénients, il est connu d'utiliser un système à entrée unique.

Il existe un système SWIR (0,9 $\mu$m- 1,8 pm)/LWIR (8 $\mu$m - 12 $\mu$m) à entrée unique décrit dans les brevets US 6 999 231 et US 2005/200946 A1. L'optique de tête en ZnSe est divergente ce qui augmente l'encombrement du système. Après l'entrée, les deux voies IR sont séparées par un cube épais qui comprend sur la voie SWIR un miroir convergent et une face de sortie divergente. Dans ce cube-séparateur, la réflexion directe est portée par la voie LWIR et la transmission est polarisée sur la voie SWIR, ce qui signifie qu'on perd la moitié de la lumière incidente sur cette voie. De plus ce système n'est pas adapté à la bande spectrale visible. Enfin ce système n'est pas compatible des grandes ouvertures (de l'ordre de F/1.5 à F/1) requis par les équipements portables mains-libres.

Un autre système est décrit dans la publication SPIE Vol 1013 « Wide Waveband Infra-red Optics ». Il s'agit d'un système à entrée et optiques uniques sans séparation des voies, et de ce fait très sensible aux aberrations chromatiques.

La réduction des aberrations chromatiques impose d'utiliser plusieurs matériaux différents. Les matériaux transparents dans le visible et le lointain infrarouge sont à base de cristal naturel ou de synthèse. Dans la catégorie des halogénures, on trouve le NaCl, le NaF, le KCI, le KBr, le KI, le CSI, le CsBr, l'AgCI, le KRS5, le KrS6. Ils sont souvent associés à des médiocres propriétés mécaniques (faibles duretés Knoop), certains sont solubles et, à l'exception des Bromo-iodure de thallium, présentent de faibles indices de réfraction, ce qui n'est pas favorable à la correction des aberrations géométriques. Leurs médiocres propriétés mécaniques et, pour certains, leurs toxicités ont disqualifié leur emploi dans des applications industrielles ou militaires. Le ZnSe qui ne couvre pas complètement la bande visible (il ne transmet pas le bas de la bande visible), et surtout le ZnS réalisé par CVD acronyme de l'expression anglo-saxonne « Chemical Vapor Deposition » et par une purification pour éliminer les composés hybrides Zinc de la structure cristalline, sont les seuls d'usage courant et industriels.

En conséquence, il demeure à ce jour un besoin pour un système donnant simultanément satisfaction à l'ensemble des exigences précitées, à savoir fonctionnant au moins dans les bandes spectrales visible et IR lointain, et adapté à des équipements portables mains libres c'est-à-dire compact, demandant un grand champ et une ouverture importante.

Plus précisément l'invention a pour objet un système optique apte à fonctionner dans plusieurs bandes spectrales dont les bandes visible et IR lointain, une voie spectrale étant associée à une bande spectrale. Il comprend :

- un groupe optique de tête dioptrique convergent commun aux dites bandes spectrales, comportant des matériaux transparents dans lesdites bandes spectrales à base de verres de chalco-halogénures reposant sur un système au moins ternaire et contenant du soufre,
- un séparateur des voies spectrales en aval du groupe de tête,
- sur chaque voie spectrale :

    i. un relais dioptrique convergent de correction des aberrations chromatiques et géométriques,
    ii. un capteur bi-dimensionnel apte à fournir un signal,

- un mélangeur des signaux issus de chaque capteur.

On obtient ainsi un système de fusion de capteurs grands champs, compact, léger et sans parallaxe. De plus, la présence des relais arrières dispense d'un objectif super-achromatique qui devrait être corrigé du chromatisme sur un spectre large enveloppant l'ensemble des bandes spectrales.

Par ailleurs, les matériaux utilisés sont plus variés que ceux décrits dans l'art antérieur et plus faciles d'emploi.

Selon une caractéristique de l'invention, le (ou les) relai(s) de correction comporte des matériaux transparents dans sa bande spectrale basés sur ces verres de chalco-halogénures.

Selon une autre caractéristique de l'invention, le groupe de tête comprend un réseau diffractif dont la profondeur e des marches est sensiblement égale à $\lambda_m/(n-1)$, $\lambda_m$ étant la longueur d'onde moyenne de la bande inférieure, n, l'indice de réfraction du substrat. Cette profondeur e maximise ainsi le rendement de diffraction de la bande inférieure. De même, un relais de correction étant apte à fonctionner dans la bande spectrale la plus basse et l'autre relais dans la bande spectrale la plus haute, chaque relais de correction peut comprendre un réseau diffractif dont la profondeur e des marches est sensiblement égale à $\lambda_m/(n-1)$, $\lambda_m$ étant la longueur d'onde moyenne de la bande de fonctionnement dudit relais, de manière là aussi à maximiser le rendement de diffraction.

Le mélangeur peut être optique ou analogique ou numérique.

De préférence, le séparateur est apte à réfléchir la ou les bandes spectrales inférieures et à transmettre la bande spectrale supérieure.

Selon un mode d'exploitation de l'invention, le système est bi-spectral ; la première bande spectrale est par exemple comprise entre 0,4 $\mu$m et 1,1 $\mu$m et la deuxième bande spectrale est comprise entre 7,5 $\mu$m et 14 $\mu$m ou entre 3 $\mu$m et 5 $\mu$m.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement un premier exemple de système bi-spectral selon l'invention comportant un capteur visible classique,
la figure 2 représente schématiquement un deuxième exemple de système bi-spectral selon l'invention comportant un tube à intensification de lumière comme capteur dans la bande visible,
la figure 3 représente schématiquement une variante du deuxième exemple de système bi-spectral selon l'invention, où la fusion des images provenant des capteurs s'effectue optiquement,
la figure 4 illustre deux exemples de superposition des champs visés selon 2 voies spectrales,
la figure 5 représente schématiquement en ligne, après dépliement et séparément les voies A et B d'un exemple de système bi-spectral selon l'invention,
la figure 6 représente schématiquement le critère retenu pour évaluer la qualité optique demandée à l'optique de la voie A, compte tenu des dimensions élémentaires du pixel dans cette bande.
la figure 7 donne les rendements de diffraction d'un réseau dans les ordres 3, 2, 1, -1, -2 et -3 pour une longueur d'onde égale à 10 $\mu$m, quand la profondeur de ce réseau est optimisée pour la bande visible.

D'une figure à l'autre, les mêmes éléments sont repérés par les mêmes références.

Pour s'affranchir des problèmes de parallaxe décrits précédemment, le système selon l'invention comprend une entrée unique.

La partie optique de tête multispectrale 1, apporte une certaine puissance optique de façon à ce que les rayons soient progressivement déviés vers les détecteurs dans un encombrement restreint.

Pour des champs modérés (< 10°), des optiques à miroirs peuvent être envisagées. Par contre, pour fournir une entrée commune quelle que soit la longueur d'onde, tout en restant compatible des grandes ouvertures (de l'ordre de F/0,7 à F/2) et de grands champs tels que requis par des équipements portables mains-libres, le système doit déployer une combinaison dioptrique. Par grand champ, on entend des couvertures angulaires supérieures à 10° (typiquement de 30° à 60°).

Enfin, le système est multi-spectral ; il permet de fusionner au moins deux bandes spectrales. Les bandes spectrales notées A et B d'un système bi-spectral sont par exemple :

A : Une sous-bande de la bande 0.4 $\mu$m -1.1 $\mu$m ou cette bande complète.

B $\begin{cases} \text{Une sous-bande de la bande 7.5 } \mu\text{m} - 13 \text{ } \mu\text{m ou cette bande complète, ou} \\ \text{une sous-bande de la bande 3-5 } \mu\text{m ou cette bande complète.} \end{cases}$

Il s'agit de corriger les aberrations chromatiques axiales primaires, secondaires et latérales dans les bandes d'utilisation A et B du système multi-spectral.

Selon l'invention, les aberrations chromatiques sont corrigées en partie par le groupe de tête puis individuellement après séparation des voies spectrales par les relais arrières.

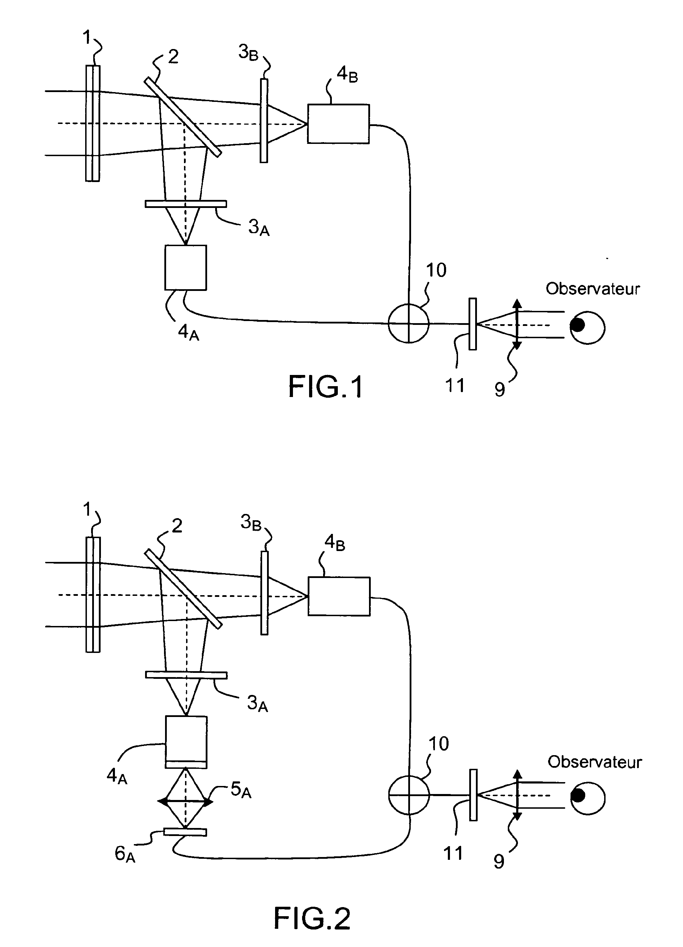

Le système bi-spectral décrit en relation avec les figures 1, 2 et 3 comprend un groupe optique de tête 1, une lame séparatrice 2 (une lame à faces planes parallèles, ou une lame mince prismatique) ou un cube séparateur, puis les relais optiques arrières de corrections 3A, 3B respectivement dédiés à chaque bande spectrale individuelle. Cette séparation s'effectue préférentiellement par transmission des grandes longueurs d'onde et réflexion des courtes longueurs d'onde de façon à obtenir une bande passante plus large.

Le système comprend une matrice bi-dimensionnelle 4B, sensible aux rayonnements infrarouges, refroidie ou non refroidie. Dans la bande IR3, celle-ci peut être constituée de mosaïques refroidies (HgCdTe, multi-puits quantiques) ou non refroidies (micro-bolomètres à base de Silicium amorphe ou d'oxyde de Vanadium). Dans la bande IR2, celle-ci peut être constituée de détecteurs refroidis InSb, HgCdTe. Le signal est exploité pour donner une image sur une unité de visualisation, type LCD ou OLED.

L'invention comporte également un second capteur bi-dimensionnel 4A opérant dans la bande visible. Ce capteur peut être constitué :

d'une caméra standard couleur ou noir et blanc, CCD ou CMOS,
d'une caméra bas niveau de lumière (caméra BNL), basée sur les technologies EBCMOS, EBCCD, EBAPS , MCP CMOS, MCP CCD, ICCD, ICMOS ou à base de silicium aminci,
d'un tube à intensification de lumière, appelé tube IL, comprenant une photocathode, un système à amplification à base de micro-canaux, un écran de visualisation dont la partie émissive est en phosphore, associé à un oculaire ou à un bioculaire de reprise d'image.

Dans les deux premiers cas, le signal vidéo est exploité et traité pour donner une image sur une unité de visualisation type LCD ou OLED. Les signaux infrarouges et visibles sont alors superposables, après traitements éventuels sur un dispositif de visualisation 11 unique.

Dans le cas d'un tube IL, l'image donnée par le phosphore peut être reprise par une caméra 6A, via une optique de reprise 5A, comme le montre la figure 2 de façon à ce qu'un signal vidéo soit accessible, visualisable, mélangeable à l'image IR, et traitable.

Le système comprend un mélangeur 10.

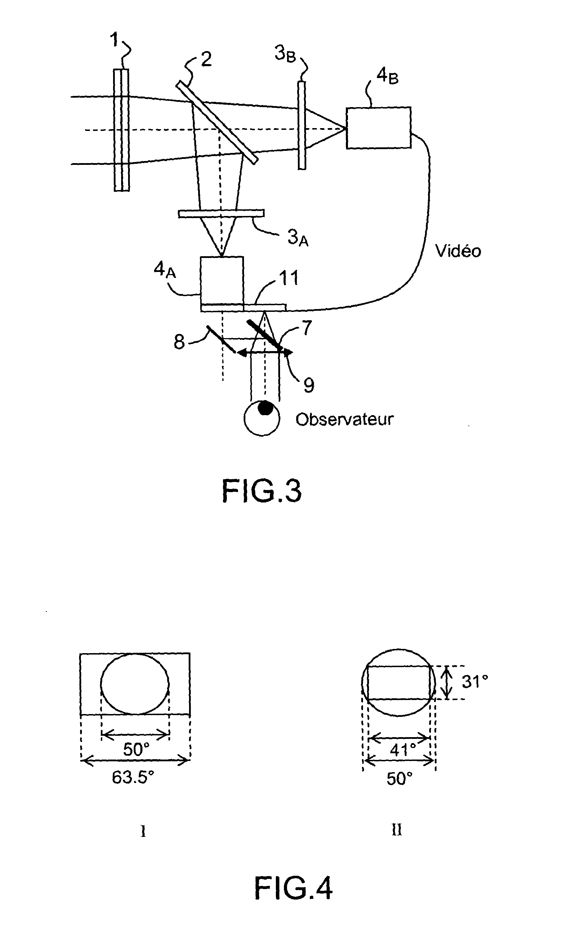

Dans une variante, le mélange s'effectue optiquement et le mélangeur 10 comprend une lame séparatrice semi-réfléchissante 7, comme le montre la figure 3, ainsi qu'un miroir 8 qui renvoie le faisceau de la voie A sur la lame semi-réfléchissante 7.

Un ou des oculaires 9 permettent la projection de l'image dans l'oeil ou les yeux de l'observateur.

On considère à présent les caractéristiques optiques du système selon l'invention. Pour un système de fusion de senseurs, la solution de base consiste à superposer sur une portion du champ du système les images dans les bandes A et B à la même échelle. Si l'on choisit un capteur infrarouge non refroidi (IRNR) bas coût, puisque cette voie sert essentiellement au décamouflage, la résolution sur la bande B est donc inférieure à celle de la bande A.

Si $F_A$ est la focale globale de la voie A, $F_B$ la focale globale de la voie B, $D_A$ et $D_B$ les dimensions respectives des capteurs 4A et 4B, les champs de vue $2\theta_A$ et $2\theta_B$ sont donnés par les relations dans le domaine paraxial, en négligeant donc la distorsion :

$$D_A = 2.F_A.\tan(\theta_A) \quad D_B = 2.F_B.\tan(\theta_B)$$

Les ouvertures dépendent des bilans photométriques. Sur la bande B, les ouvertures, pour les applications infrarouges non refroidies vont de F/0.8 à F/1.5 typiquement. Pour les applications refroidies IR2, les ouvertures typiques sont de l'ordre de F/3. Pour les caméras à bas niveau de lumière ou à tube IL, les ouvertures sont de l'ordre de F/1 à F/1.5

On va donner quelques ordres de grandeur à partir de deux exemples de fusion IUIRNR, selon une architecture du type de la figure 3.

Exemple 1 :

Capteur 4A IL (voie A) , circulaire, Diamètre : 18 mm Ouverture F/1.2
Capteur 4B IRNR (voie B) 384x288 au pas de 25 $\mu$m Ouverture F/1
Dimensions de la mosaïque IRNR : 9.6 x 7.2 mm$^2$
Champs visés illustrés figure 4 :

50° horizontal sur la voie visible A,

$$\begin{cases} 63{,}7°\ \text{horizontal sur la voie B, IR (cas I) ou} \\ 41°\ \text{horizontal sur la voie B, IR (cas II).} \end{cases}$$

Les caractéristiques optiques sont données par le tableau ci-dessous.

|  | Cas I | | Cas II | |
|---|---|---|---|---|
|  | Voie IL(A) | Voie IR(B) | Voie IL(A) | Voie IR(B) |
| Champ diagonal | 50° | 75.7° | 50° | 50° |
| Champ horizontal | 50° | 63.7° | 50° | 41° |
| Champ vertical | 50° | 50° | 50° | 31° |
| Ouverture | 1.2 | 1 | 1.2 | 1 |
| Focale | 19.3 mm | 7.7 mm | 19.3 mm | 12.9 mm |
| Diamètre pupille | 16 mm | 7.7 mm | 16 mm | 12.9 mm |

Exemple 2:

Capteur 4A IL : idem que pour exemple 1
Capteur 4B IRNR (voie B) 384x288 au pas de 35 $\mu$m Ouverture F/1
Dimensions de la mosaïque IRNR : 13.44 x 10.08 mm$^2$
Champs visés : idem que pour exemple 1.

Les caractéristiques optiques sont données par le tableau ci-dessous.

|  | Cas I | | Cas II | |
|---|---|---|---|---|
|  | Voie IL (A) | Voie IR (B) | Voie IL (A) | Voie IR (B) |
| Champ diagonal | 50° | 75.7° | 50° | 50° |
| Champ horizontal | 50° | 63.7° | 50° | 41° |
| Champ vertical | 50° | 50° | 50° | 31° |
| Ouverture | 1.2 | 1 | 1.2 | 1 |
| Focale | 19.3 mm | 10.8 mm | 19.3 mm | 18 mm |
| Diamètre pupille | 16 mm | 10.8 mm | 16 mm | 18 mm |

Pour illustrer la suite, on considère désormais les deux cas :

La solution II de la version capteur IRNR 25 $\mu$m (exemple 1)
Focale IR = 12.9 mm
Focale IL = 19.3 mm
La solution II de la version capteur IRNR 35 $\mu$m (exemple 2)
Focale IR = 18 mm
Focale IL = 19.3 mm

Les diaphragmes d'ouverture, associés aux bandes A et B, sont supposés placés au voisinage du séparateur 2 soit, approximativement à mi-course du groupe de tête 1 et des relais arrières 3A, 3B, de manière à corriger le chromatisme latéral qui dépend de la position des pupilles.

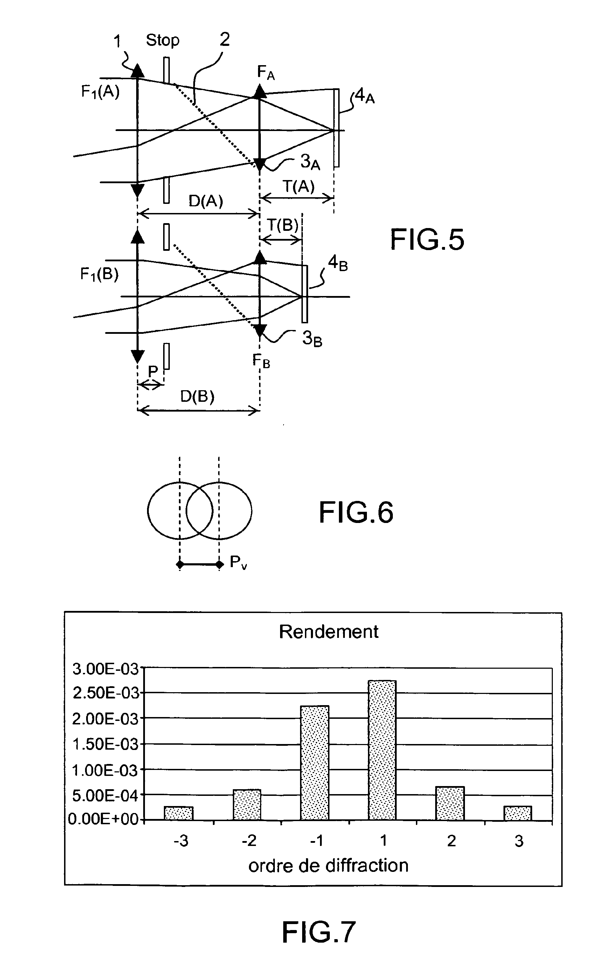

On va à présent détailler les caractéristiques du groupe de tête 1 et des relais arrières 3A, 3B. Sur la figure 5 on a décomposé les voies A et B du système selon l'invention en deux schémas en ligne pour simplifier.

Les aberrations chromatiques sont corrigées en partie par le groupe de tête 1 puis individuellement après séparation des voies spectrales par les relais arrières 3A, 3B. On sait par ailleurs que les aberrations sont d'autant plus difficiles à corriger que les lentilles sont puissantes.

A cet effet le groupe de tête et les relais arrières comprennent plusieurs matériaux transparents à la fois dans la bande visible et l'IR lointain (aussi désigné IR thermique) et/ou un réseau diffractif. Ces matériaux sont de préférence basés sur des verres de chalco-halogénures reposant sur des alternances au moins ternaires et contenant du soufre telles que : $GeS_2$-$Ga_2S_3$-$CsCl$, $La_2S_3$-$Ga_2S_3$-$CsCl$ ou $La_2S_3$-$Ga_2S_3$-$Rbl$. Un halogène est un élément chimique du groupe 17 du tableau de Mendeleïev : chlore, brome, iode, fluor, astate. Les halogènes ont 7 électrons dans leur orbitale externe : quand ils gagnent un électron, pour compléter cette couche et rejoindre un état stable, ils forment un ion négatif, aussi nommé halogénure. La famille des chalcogènes est formée par la colonne 16 du tableau de Mendeleiev, et ont tendance à capter 2 électrons ou à former deux liaisons covalentes. On trouve dans cette famille, l'Oxygène, le Soufre, le Sélénium, le Tellure et le Polonium. On introduit les notations suivantes.

On suppose que la bande basse A est $[\lambda_{Am}, \lambda_{AM}]$ de longueur d'onde moyenne $\lambda_A$.

On suppose que la bande haute B est $[\lambda_{Bm}, \lambda_{BM}]$ de longueur d'onde moyenne $\lambda_B$.

$n(\lambda)$ est l'indice de réfraction.

Pour un matériau donné, associé à une lentille i, on repère les constringences primaires par :

$$\upsilon(A) = \frac{n(\lambda_A)-1}{n(\lambda_{Am})-n(\lambda_{AM})} \quad \upsilon(B) = \frac{n(\lambda_B)-1}{n(\lambda_{Bm})-n(\lambda_{BM})} \quad \gamma(B) = \frac{n(\lambda_A)-1}{n(\lambda_{Bm})-n(\lambda_{BM})} \quad \kappa = \frac{n(\lambda_A)-1}{n(\lambda_B)-1}$$

On introduit la notion de dispersion secondaire :

$$\sigma(A) = \frac{n(\lambda_A)-1}{n(\lambda_A)-n(\lambda_{AM})} \quad \sigma(B) = \frac{n(\lambda_B)-1}{n(\lambda_B)-n(\lambda_{BM})} \quad \eta(B) = \frac{n(\lambda_A)-1}{n(\lambda_B)-n(\lambda_{BM})}$$

Les matériaux reposant sur les alternances décrites précédemment ont des caractéristiques comprises dans les domaines suivants :

|  | Borne minimale | Borne maximale | Commentaires |
|---|---|---|---|
| $\upsilon_A$ | 5 | 30 |  |
| $\upsilon_B$ | 15 | 200 | $\upsilon_B$ est généralement supérieure à $\upsilon_A$ |
| $\gamma_B$ | 15 | 220 | $\gamma(B)/\upsilon(B)$ entre 1.04 et 1.5 |
| $\sigma_A$ | 8 | 90 |  |
| $\sigma_B$ | 30 | 500 |  |
| $\eta_B$ | 30 | 550 | $\eta(B)/\sigma(B)=\gamma(B)/\upsilon(B)$ entre 1.04 et 1.5 |

On sait que quand l'on est proche d'une bande d'absorption, le matériau devient très dispersif (faibles valeurs de $\upsilon$ et de $\sigma$).

Considérons un exemple, quand la base ternaire est constituée du $GeS_2$, de $Ga_2S_3$ et du $CsCl$. On constate, qu'entre les limites correspondant aux phases cristallisées, les différents verres obtenus, par adaptation des proportions relatives de $GeS_2$ et de $CsCl$ sont plus ou moins jaunâtres.

La grande originalité est le contrôle du taux de Chlorure de Césium pour adapter la longueur d'onde de démarrage basse. Les compositions comprenant de plus fortes proportions de Chlorure de Césium, fourniront des verres plus transparents dans le bleu.

La longueur d'onde de transition optique vers l'ultraviolet est reliée au bandgap Eg, écart d'énergie entre la bande de valence et la bande de conduction du composant considéré, à la constante de Planck, h, et à la vitesse de la lumière c par la relation :

$$\lambda g = h.c/Eg$$

Des composés de verre de gaps optiques trop réduits ou une pollution par des éléments de transition limitent ainsi la transparence du verre dans le proche UV et le visible.

L'introduction progressive d'halogénures d'alcalins augmente le band-gap et donc la limite de transparence aux basses longueurs d'onde : les halogènes sont des éléments fortement électronégatifs et l'on diminue la délocalisation des électrons sur certains atomes.

En adaptant sur cet exemple, il y a donc, indirectement, un moyen d'ajuster la longueur d'onde de coupure basse, $\lambda_g$, et par conséquent, la dispersion chromatique dans la bande basse, A.

L'absorption multiphonon régit la transparence des verres dans l'infrarouge. Elle est limitée par les vibrations du réseau et, en première approximation, obéit à un simple modèle diatomique.

Si $\mu$ est la masse réduite des deux atomes, f la constante de force de leur liaison, la longueur d'onde de coupure haute est un sous multiple de $\lambda_1$ :

$$\lambda_1 = 2\Pi c(\mu/f)^{1/2}$$

Il faut donc privilégier des éléments lourds (pour augmenter $\mu$) et plutôt des liaisons ioniques (pour réduire f).

C'est principalement la teneur en soufre qui fixera la limite haute : le Sélénium serait un peu plus favorable (jusqu'à 15 $\mu$m), par contre ses transmissions en visible sont un peu justes.

Ces matériaux sont choisis de manière à optimiser une fonction $M_C$ de mérite chromatique pondérée et les puissances sont choisies de manière à optimiser une fonction $M_P$ de mérite de puissance globale pour les deux bandes. Ces fonctions sont définies par les formules :

$$M_C = p_a(A).\delta\varphi_a(A)^2 + p_a(B).\delta\varphi_a(B)^2 + p_l(A).\delta\varphi_l(A)^2 + p_l(B).\delta\varphi_l(B)^2 + p_s(A).\delta\varphi_s(A)^2 + p_s(B).\delta\varphi_s(B)^2$$

$p_a$, $p_l$, $p_s$ sont des respectivement des coefficients de pondération du chromatisme axial, latéral et secondaire ; ces coefficients peuvent dépendre de la bande spectrale considérée.

$\delta\varphi_a(A)$, $\delta\varphi_l(A)$ et $\delta\varphi_s(A)$ correspondent respectivement aux diamètres des taches induites par le chromatisme axial primaire, latéral et secondaire en bande A,

$\delta\varphi_a(B)$, $\delta\varphi_l(B)$ et $\delta\varphi_s(B)$ ont trait respectivement aux diamètres des taches induites par le chromatisme axial primaire, latéral et secondaire, en bande B.

$$M_P = \sum_{i=1}^{N} \frac{1}{F_{1i}^2(A)} + \sum_{i=1}^{M} \frac{1}{F_{Ai}^2(A)} + \sum_{i=1}^{N} \frac{1}{F_{1i}^2(B)} + \sum_{i=1}^{L} \frac{1}{F_{Bi}^2(B)}$$

Pour diminuer les puissances (et donc augmenter les focales) pour ne pas rendre la combinaison trop sensible aux aberrations géométriques, les solutions à $M_P$ minimales seront préférées.

On suppose que le groupe de tête est composé de N lentilles, que le relais associé à la bande A comprend M lentilles et que le transport correspondant à la bande B contient L lentilles.

$F_{1i}(A)$ sont les focales des lentilles composant le groupe de tête 1 pour la bande A,

$F_{1i}(B)$ sont les focales des lentilles du groupe de tête 1 pour la bande B,

$F_{Ai}(A)$ sont les focales des lentilles composant le relais 3A pour la bande A,

$F_{Bi}(B)$ sont les focales des lentilles composant le relais 3B pour la bande B.

La fonction $M_C$ de mérite chromatique est par exemple optimisée par une technique des moindres carrés. Ensuite les puissances choisies sont celles dont la fonction $M_P$ de mérite est par exemple la plus petite.

Pour limiter le nombre de matériaux nécessaires, on peut utiliser une surface diffractive, reconstituant ainsi un matériau artificiel dont la dispersion chromatique est régie par le pas du réseau. La profondeur des marches, elle, régit l'efficacité de diffraction à une longueur d'onde donnée. Dans la suite sauf indication contraire, on désignera par matériaux, aussi bien des verres optiques qu'un réseau diffractif. Quand un réseau fonctionne à l'ordre N, pour la longueur d'onde $\lambda$, quand l'indice de réfraction du substrat d'accueil vaut $n(\lambda)$, sous le régime scalaire et dans l'approximation des faibles angles d'incidence, le rendement $R_\lambda$ s'écrit en fonction de la profondeur par la relation :

$$R_\lambda = \operatorname{sinc}^2\{\ \lambda.[N - e.(n(\lambda)\text{-}1)/\ \lambda]\}$$

Les solutions diffractives multispectrales reposent sur le principe suivant:

*le réseau fonctionne à l'ordre 1 pour la bande spectrale la plus haute, ici la bande B ;
*le réseau fonctionne à un ordre élevé pour la bande basse, ici la bande A ; cet ordre est l'entier le plus proche du ratio 'Longueur d'onde moyenne de la bande B/ Longueur d'onde moyenne de la bande A'.

Ainsi, pour une utilisation dans le visible et l'infrarouge lointain, cet ordre est élevé.
Or on sait que ces configurations sont pénalisées par de médiocres rendements de diffraction aux ordres de diffraction élevés, notamment ici, sur la bande A, bande visible. Une solution consiste à utiliser une surface diffractive fonctionnant dans l'ordre 1 pour le visible.
La constringence chromatique primaire liée au réseau s'écrit donc :

$$V(A) = \frac{\lambda_A}{(\lambda_{Am} - \lambda_{AM})}$$

Et la constringence chromatique secondaire :

$$\sigma(A) = \frac{\lambda_A}{(\lambda_A - \lambda_{AM})}$$

Le rendement de diffraction, dans le domaine des faibles angles, est donné par :

$$R(A) = \sin c^2 \left[ \pi.\left( N - e.\frac{n(\lambda_A) - 1}{\lambda_A} \right) \right]$$

expression dans laquelle, N est l'ordre de diffraction, e, la profondeur des marches du réseau.
Pour un substrat visible d'indice 1.5, en négligeant les variations de l'indice avec la longueur d'onde, et pour le premier ordre de diffraction N=1, le rendement est maximal quand :

$$e = \frac{\lambda_A}{n(\lambda_A) - 1} = 2.\lambda_A = 1\,\mu m$$

pour $\lambda$ = 0.5 $\mu$m.
Les rendements de diffraction associés aux différents ordres, dans la bande B s'écrivent :

$$R(B) = \sin c^2 \left[ \pi.\left( N - \frac{n(\lambda_B) - 1}{\lambda_B}.\frac{\lambda_A}{n(\lambda_A) - 1} \right) \right]$$

Si on néglige les variations d'indice du substrat avec la longueur d'onde, pour $\lambda_B$ = 10 $\mu$m, la figure 7 donne les rendements de diffraction dans les ordres 3, 2, 1, -1, -2 et -3.
On note que ceux-ci sont très faibles, de sorte qu'à 10 $\mu$m, une grande partie de l'énergie reste confinée dans l'ordre 0. Le réseau n'est donc pas visible à cette longueur d'onde.

Ainsi, même dans le groupe de tête multispectral 1, il est possible de dissocier la correction du chromatisme dans les deux bandes, en ajoutant un profil diffractif qui opère pour la voie visible (bande A) qui n'est pas vu dans la bande IR (bande B).

On va donner des exemples de matériaux et de puissance du groupe de tête et des relais arrières en considérant tout d'abord le cas II de l'exemple 1.

Dans cet exemple :

la taille du pixel IR vaut $p_{IR}$ = 25 $\mu$m,
la focale globale de la voie IL (A) : 19.3 mm
la focale globale de la voie IR (B) : 12.9 mm.

Pour la voie IL, on considère une spécification de résolution à 70 paires de lignes/mm qui est typiquement celle d'un tube IL de très bonne qualité.

Comme le montre la figure 6, la taille du pixel du capteur visible de la voie A est au plus égale à $p_v$ = 1/70 = 14 $\mu$m ; on impose donc des dimensions radiales de tache inférieures à 7 $\mu$m sur la voie visible.

Sur la voie IR, la tache ne doit pas excéder la limite de diffraction, de diamètre 2.44 $\lambda$.N = 24 $\mu$m à F/1 ce qui dans ce cas est respecté puisque la taille du pixel IR vaut $p_{IR}$ = 25 $\mu$m.

On choisit par exemple la pondération suivante pour l'optimisation :

| Pondération | | | | | | |
|---|---|---|---|---|---|---|
| Pondération | Pa(A) | Pa(B) | Pl(A) | Pl(B) | Ps(A) | Ps(B) |
| | 2 | 1 | 2 | 1 | 2 | 1 |

Les focales sont assez dispersées. La distance groupe de tête 1-relais A fixée à 25 mm. Comme la focale du relais 3B est réduite, on descend la distance du groupe 1- relais 3B à 20 mm.

Les tirages sont adaptés pour présenter des focales du groupe 1 relativement proches.

La pupille (le stop) est située à mi-course de la distance D(A).

Comme les ouvertures dans les deux bandes A et B diffèrent, le diaphragme d'ouverture se situe de préférence dans les relais arrières.

La mise en place paraxiale donne les paramètres suivants :

Focale globale de la voie A F(A) : 19,3 mm,
Focale globale de la voie B F(B) : 12,9 mm
Tirage T(A) : 14 mm, Tirage T(B) : 10 mm,
Position pupille : 12,5 mm
Distance 1-3A : 25 mm, Distance 1-3B : 20 mm
Focale du groupe de tête pour la voie A $F_1$(A) : 91,04 mm,
Focale du groupe de tête pour la voie B $F_1$(B) : 88,97 mm
Focale du relais 3A, $F_A$ : 17,77 mm,
Focale du relais 3B, $F_B$ : 11,69 mm.

Différentes solutions de matériaux sont présentées dans les tableaux suivants.

Les fonctions de mérite chromatiques sont plus prometteuses quand le groupe de tête 1 comprend 3 matériaux. Pour un groupe de tête comportant 3 matériaux, et des relais en comportant chacun 2, on peut avoir différentes combinaisons possible.

Dans l'exemple 1 (cas II), les caractéristiques des systèmes ternaires ou quaternaires des chalcogénures soufrés sont les suivantes avec deux exemples de verres chalcogénures (verre chalcogénure 1, verre chalcogénure 2):

| | Verre chalcogénure 1 | Verre chalcogénure 2 |
|---|---|---|
| $\nu_A$ | 15.0 | 25.0 |
| $\nu_B$ | 200.0 | 130.0 |
| $\gamma_B$ | 210.0 | 135.2 |
| $\sigma_A$ | 60.0 | 85.0 |

(suite)

|  | Verre chalcogénure 1 | Verre chalcogénure 2 |
|---|---|---|
| $\sigma_B$ | 350.0 | 240.0 |
| $\eta_B$ | 367.5 | 249.6 |

Les bandes de travail sont les suivantes :

Bande 0.5-0.9 $\mu$m
Bande 8-12 $\mu$m.

Dans cet exemple, le groupe de tête, le relais A, le relais B comportent respectivement une alternance de trois matériaux selon les séquences suivantes :

- groupe de tête : ZnS multispectral - verre chalcogenure 1 - verre chalcogenure 2
- relais A : CaF2- verre chalcogénure 1- ZnS multispectral.
- relais B : Ge- ZnS multispectral.

Les résultats sont les suivants, les valeurs des focales étant données en mm, ainsi que la fonction de mérite du chromatisme :
Les focales du groupe de tête sont égales à :

ZnSM : -290.2
verre chalcogénure 1 : -77.3
verre chalcogénure 2 : 36.5

Les focales du relais A sont égales à :

CaF2 : 10.6
verre chalcogénure 2 : -26.5

Les focales du relais B sont égales à :

Ge : 10.6
ZnSM : -469.1.

La fonction de mérite des puissances est égale à 0.0189, la fonction de mérite de correction des aberrations chromatiques pondérée est égale à 0.00025.
Quand le groupe frontal comporte 4 éléments, toutes les aberrations sont pratiquement corrigées. Pour un groupe de tête comportant 4 matériaux, et des relais en comportant chacun 2, on a comme résultats :
Les focales du groupe de tête sont égales à :

ZnSM : 91.4
verre chalcogénure 1 : 11.9
verre chalcogénure 2 : -17.36
ZnSe : -37.93

Les focales du relais A sont égales à :

CaF2 : 10.7
verre chalcogénure 2 : -26.89

Les focales du relais B sont égales à :

Gasir : 11.95
Réseau diffractif : 553.6

La fonction de mérite des puissances est égale à 0.0276, la fonction de mérite de correction des aberrations chromatiques pondérée est égale à 2.6362 10$^{-5}$.

A noter que dans cet exemple, le relais de la bande B comporte un réseau diffractif de sorte qu'à ce niveau, il n'y a qu'un seul matériau.

Pour diminuer le nombre de matériaux nécessaires dans l'optique de tête multispectrale, on peut, selon l'invention, utiliser un profil diffractif qui ne sera 'vu' que dans la bande visible. C'est l'exemple suivant :

Les focales du groupe de tête sont égales à :

ZnSM : -336.68
verre chalcogénure 1 : -199.352
verre chalcogénure 2 : 53.73
Réseau diffractif : 2792.194

Les focales du relais A sont égales à :

CaF2 : 10.7
verre chalcogénure 2 : -26.96

Les focales du relais B sont égales à :

Gasir : 11.95
Réseau diffractif : 565.85

La fonction de mérite des puissances est égale à 0.0175, la fonction de mérite de correction des aberrations chromatiques pondérée est égale à 1.8373 10$^{-5}$.

Dans les résultats ci-dessus ZnSM désigne le ZnS multispectral.

A présent, on va donner des exemples de matériaux et de puissance du groupe de tête et des relais arrières en considérant le cas II de l'exemple 2 dans lequel on utilise le même capteur IL avec des champs de l'ordre de 50° sur la voie thermique. La taille du pixel IR, pour cet exemple, vaut $p_{IR}$ = 35 $\mu$m.

La focale IR est maintenant assez voisine de la voie visible, elle vaut $F_{IR}$ = 18 mm.

La focale de la voie visible reste calée à 19.3 mm.

Les focales sont donc assez voisines.

La pondération de l'exemple précédent est gardée, pour l'optimisation :

Les distances 1-3A et 1-3B sont fixés à 25 mm.

La mise en place paraxiale donne les résultats suivants :

Focale globale de la voie A F(A) : 19,3 mm,
Focale globale de la voie B F(B) : 18 mm
Tirage T(A) : 14 mm, Tirage T(B) : 13 mm,
Position pupille : 12,5 mm
Focale du groupe de tête pour la voie A $F_1$(A) : 91,04 mm,
Focale du groupe de tête pour la voie B $F_1$(B) : 90 mm
Focale du relais $F_A$ : 17,77 mm,
Focale du relais $F_B$ : 16,25 mm.

Pour un groupe de tête comportant 3 matériaux et des relais comportant chacun 2 matériaux, on a les résultats suivants.

Les focales du groupe de tête sont égales à :

ZnSM : -287.55
verre chalcogénure 1 : -77.49
verre chalcogénure 2 : 36.54

Les focales du relais A sont égales à :

CaF2 : 10.7

verre chalcogénure 2 : -26.48

Les focales du relais B sont égales à :

Ge : 15.86
ZnSM : -655.11

La fonction de mérite des puissances est égale à 0.01518, la fonction de mérite de correction des aberrations chromatiques pondérée est égale à 0.000256571.

Pour un groupe de tête comportant 4 matériaux et des relais comportant chacun 2 matériaux, on a les résultats suivants.

Les focales du groupe de tête sont égales à :

ZnSM : -339.89
verre chalcogénure 1 : -197.4
verre chalcogénure 2 : 53.66
Réseau diffractif : 2798.385

Les focales du relais A sont égales à :

CaF2 : 10.7
verre chalcogénure 2 : -26.96

Les focales du relais B sont égales à :

Gasir : 16.59
Réseau diffractif : 789.23

La fonction de mérite des puissances est égale à 0.01411, la fonction de mérite de correction des aberrations chromatiques pondérée est égale à $1.44738 \ 10^{-6}$.

Les résultats obtenus dans le cas II du 2è exemple sont plus favorables.

**Revendications**

1. Système optique apte à fonctionner dans plusieurs bandes spectrales dont les bandes visible et IR lointain, une voie spectrale étant associée à une bande spectrale, qui comprend :

    - un groupe optique de tête (1) dioptrique convergent commun aux dites bandes spectrales, comportant des matériaux transparents dans lesdites bandes spectrales à base de verres de chalco-halogénures reposant sur un système au moins ternaire et contenant du soufre,
    - un séparateur (2) des voies spectrales en aval du groupe de tête,
    - sur chaque voie spectrale :

        i. un relais dioptrique (3A, 3B) convergent de correction des aberrations chromatiques et géométriques,
        ii. un capteur bi-dimensionnel (4A, 4B) apte à fournir un signal,

    - un mélangeur (10) des signaux issus de chaque capteur.

2. Système optique selon la revendication précédente, **caractérisé en ce que** le ou les relais de correction (3A, 3B) comportant des matériaux transparents dans sa bande spectrale basés sur des halogénures.

3. Système optique selon l'une des revendications précédentes, **caractérisé en ce que** le groupe de tête (1) comprend un réseau diffractif dont la profondeur est inférieure à 5 fois la longueur d'onde moyenne de la bande spectrale supérieure, **en ce que** le réseau est apte à fonctionner à l'ordre 1 ou -1 dans la bande inférieure et que la profondeur e des marches est sensiblement égale à $\lambda_m/(n-1)$, $\lambda_m$ étant la longueur d'onde moyenne de la bande inférieure, n, l'indice de réfraction du substrat.

**4.** Système optique selon l'une des revendications précédentes, **caractérisé en ce qu'**un relais de correction (3A) étant apte à fonctionner dans la bande spectrale la plus basse et l'autre relais de correction (3B) étant apte à fonctionner dans la bande spectrale la plus haute, l'un de ces relais de correction ou les deux (3A et/ou 3B) comprennent un réseau diffractif apte à fonctionner dans l'ordre 1 ou - 1 et dont la profondeur e des marches est sensiblement égale à $\lambda_m/(n-1)$, $\lambda_m$ étant la longueur d'onde moyenne de la bande de fonctionnement du relais A et/ou B, n, l'indice de réfraction du substrat.

**5.** Système optique selon l'une des revendications précédentes, **caractérisé en ce que** le mélangeur est optique ou analogique ou numérique.

**6.** Système optique selon l'une des revendications précédentes, **caractérisé en ce que** le séparateur (2) est apte à réfléchir la ou les bandes spectrales inférieures et à transmettre la bande spectrale supérieure.

**7.** Système optique selon l'une des revendications précédentes, **caractérisé en ce que** le système est bi-spectral.

**8.** Système optique selon la revendication précédente, **caractérisé en ce que** la première bande spectrale est comprise entre 0,4 $\mu$m et 1,1 $\mu$m et la deuxième bande spectrale est comprise entre 7,5 $\mu$m et 14 $\mu$m.

**9.** Système optique selon la revendication 7, **caractérisé en ce que** la première bande spectrale est comprise entre 0,4 $\mu$m et 1,1 $\mu$m et la deuxième bande spectrale est comprise entre 3 $\mu$m et 5 $\mu$m.

**10.** Système optique selon l'une des revendications précédentes, **caractérisé en ce que** le séparateur (2) est une lame à faces planes parallèles, ou une lame mince prismatique, ou un cube massif.

**11.** Système optique selon l'une des revendications précédentes, **caractérisé en ce que** le capteur (4B) de la bande spectrale visible est une caméra CCD ou CMOS, ou un tube à intensification de lumière ou une caméra à bas niveau de lumière.

**12.** Système optique selon l'une des revendications précédentes, **caractérisé en ce que** le capteur (4A) de la bande spectrale IR est une matrice bi-dimensionnelle refroidie ou non refroidie.

**13.** Système optique selon l'une des revendications précédentes, **caractérisé en ce qu'**il comprend en outre en aval du mélangeur, un dispositif de visualisation (11) et au moins un oculaire (9).

**14.** Système optique selon la revendication 1 où les verres de chalcogénures sont les systèmes ternaires $GeS_2$-$Ga_2S_3$-CsCl, $La_2S_3$-$Ga_2S_3$-CsCl ou $La_2S_3$-$Ga_2S_3$-Rbl.

**Claims**

**1.** An optical system designed to operate in several spectral bands including the visible and far IR bands, a spectral channel being associated with a spectral band, which comprises:

- an optical convergent dioptric front group (1) common to said spectral bands, comprising materials which are transparent in said spectral bands based on chalcohalogenide glasses supported by a system which is at least ternary and which contains sulphur,
- a separator (2) of the spectral channels downstream of the front group,
- on each spectral channel:

   *i.* a convergent dioptric relay (3A, 3B) for correcting chromatic and geometric errors,
   *ii.* a bi-dimensional sensor (4A, 4B) designed to provide a signal,

- a mixer (10) for the signals originating from each sensor.

**2.** The optical sensor according to the preceding claim, **characterised in that** the correction relay(s) (3A, 3B) comprise(s) materials based on halogenides, which are transparent in its spectral band.

**3.** The optical system according to any one of the preceding claims, **characterised in that** the front group (1) comprises a diffractive grid, the depth of which is less than 5 times the mean wavelength of the upper spectral band, and **in that** the grid is designed to operate in the order of 1 or -1 in the lower band and **in that** the depth e of the steps is essentially equal to λm/(n-1), λm being the mean wavelength of the lower band and n being the refraction index of the substrate.

4. The optical system according to any one of the preceding claims, **characterised in that** as one correction relay (3A) is designed to operate in the lowest spectral band and the other correction relay (3B) is designed to operate in the highest spectral band, one or both of these correction relays (3A and/or 3B) comprises a diffractive grid designed to operate to the order 1 or -1 and wherein the depth e of the steps is essentially equal to λm/(n-1), λm being the mean wavelength of the operating band of relay A and/or B and n being the refraction index of the substrate.

5. The optical system according to any one of the preceding claims, **characterised in that** the mixer is optical, analogue or digital.

6. The optical system according to any one of the preceding claims, **characterised in that** the separator (2) is designed to reflect the lower spectral band(s) and to transmit the upper spectral band.

7. The optical system according to any one of the preceding claims, **characterised in that** the system is bi-spectral.

8. The optical system according to the preceding claim, **characterised in that** the first spectral band is between 0.4 μm and 1.1 μm and the second spectral band is between 7.5 μm and 14 μm.

9. The optical system according to claim 7, **characterised in that** the first spectral band is between 0.4 μm and 1.1 μm and the second spectral band is between 3 μm and 5 μm.

10. The optical system according to any one of the preceding claims, **characterised in that** the separator (2) is a plate with flat parallel surfaces or a thin prismatic plate or a solid cube.

11. The optical system according to any one of the preceding claims, **characterised in that** the sensor (4B) of the visible spectral band is a CCD or CMOS camera or a light intensification tube or a low light level camera.

12. The optical system according to any one of the preceding claims, **characterised in that** the sensor (4A) of the spectral band IR is a cooled or non-cooled bi-dimensional matrix.

13. The optical system according to any one of the preceding claims, **characterised in that** it further comprises a visualisation device (11) and at least one ocular (9) downstream of the mixer.

14. The optical system according to claim 1 in which the chalcogenide glasses are ternary systems $GeS_2$-$Ga_2S_3$-CsCl, $La_2S_3$-$Ga_2S_3$-$C_S$Cl or $La_2S_3$-$Ga_2S_3$-RbI.

**Patentansprüche**

1. Optisches System für den Betrieb in mehreren Spektralbändern inklusive der sichtbaren und Fern-IR-Bänder, wobei jedem Spektralband ein Spektralkanal zugeordnet ist, das Folgendes umfasst:

   - eine konvergente dioptrische optische Kopfgruppe (1), die den Spektralbändern gemeinsam ist und in den Spektralbändern transparente Materialien auf der Basis von Chalcohalogenidgläsern umfasst, die von einem System unterstützt werden, das wenigstens ternär ist und Schwefel enthält,
   - einen Separator (2) der Spektralkanäle unterhalb der Kopfgruppe,
   - auf jedem Spektralkanal:

     i. ein konvergentes dioptrisches Relais (3A, 3B) zum Korrigieren von chromatischen und geometrischen Fehlern,
     ii. einen zweidimensionalen Sensor (4A, 4B) zum Erzeugen eines Signals,

   - einen Mischer (10) für die von den einzelnen Sensoren stammenden Signale.

**2.** Optischer Sensor nach dem vorherigen Anspruch, **dadurch gekennzeichnet, dass** das/die Korrekturrelais (dA, 3B) in seinem Spektralband transparente Materialien auf Halogenidbasis umfasst/-en.

**3.** Optischer Sensor nach einem der vorherigen Ansprüche, **dadurch gekennzeichnet, dass** die Kopfgruppe (1) ein Beugungsgitter umfasst, dessen Tiefe weniger als das Fünffache der mittleren Wellenlänge des oberen Spektralbands beträgt, und **dadurch**, dass das Gitter so ausgelegt ist, dass es in der Ordnung 1 oder -1 im unteren Band arbeitet, und **dadurch**, dass die Tiefe e der Stufen im Wesentlichen gleich λm/(n-1) ist, wobei λm die mittlere Wellenlänge des unteren Bandes und n der Brechungsindex des Substrats ist.

**4.** Optischer Sensor nach einem der vorherigen Ansprüche, **dadurch gekennzeichnet, dass**, da ein Korrekturrelais (3A) für den Betrieb im tiefsten Spektralband und das andere Korrekturrelais (3B) für den Betrieb im höchsten Spektralband ausgelegt ist, eines oder beide dieser Korrekturrelais (3A und/oder 3B) ein Beugungsgitter umfasst/-en, das für den Betrieb in der Ordnung 1 oder -1 ausgelegt ist, und wobei die Tiefe e der Stufen im Wesentlichen gleich λm/(n-1) ist, wobei λm die mittlere Wellenlänge des Betriebsbandes von Relais A und/oder B und n der Brechungsindex des Substrats ist.

**5.** Optischer Sensor nach einem der vorherigen Ansprüche, **dadurch gekennzeichnet, dass** der Mischer optisch, analog oder digital ist.

**6.** Optischer Sensor nach einem der vorherigen Ansprüche, **dadurch gekennzeichnet, dass** der Separator (2) so ausgelegt ist, dass er das oder die unteren Spektralbänder reflektiert und das obere Spektralband durchlässt.

**7.** Optischer Sensor nach einem der vorherigen Ansprüche, **dadurch gekennzeichnet, dass** das System bispektral ist.

**8.** Optischer Sensor nach dem vorherigen Anspruch, **dadurch gekennzeichnet, dass** das erste Spektralband zwischen 0,4 $\mu$m und 1,1 $\mu$m und das zweite Spektralband zwischen 7,5 $\mu$m und 14 $\mu$m ist.

**9.** Optischer Sensor nach Anspruch 7, **dadurch gekennzeichnet, dass** das erste Spektralband zwischen 0,4 $\mu$m und 1,1 $\mu$m und das zweite Spektralband zwischen 3 $\mu$m und 5 $\mu$m ist.

**10.** Optischer Sensor nach einem der vorherigen Ansprüche, **dadurch gekennzeichnet, dass** der Separator (2) eine Platte mit planparallelen Oberflächen oder eine dünne prismatische Platte oder ein massiver Würfel ist.

**11.** Optischer Sensor nach einem der vorherigen Ansprüche, **dadurch gekennzeichnet, dass** der Sensor (4B) des sichtbaren Spektralbands eine CCD- oder CMOS-Kamera oder eine Lichtverstärkerröhre oder eine Restlichtkamera ist.

**12.** Optischer Sensor nach einem der vorherigen Ansprüche, **dadurch gekennzeichnet, dass** der Sensor (4A) des IR-Spektralbands eine gekühlte oder ungekühlte zweidimensionale Matrix ist.

**13.** Optischer Sensor nach einem der vorherigen Ansprüche, **dadurch gekennzeichnet, dass** er ferner ein Anzeigegerät (11) und wenigstens ein Okular (9) unterhalb des Mischers umfasst.

**14.** Optisches System nach Anspruch 1, bei dem die Chalcogenidgläser ternäre Systeme $GeS_2$-$Ga_2S_3$-CsCl, $La_2S_3$-$Ga_2S_3$-CsCl oder $La_2S_3$-$Ga_2S_3$-Rbl sind.

FIG.1

FIG.2

FIG.3

FIG.4

FIG.5

FIG.6

FIG.7

## RÉFÉRENCES CITÉES DANS LA DESCRIPTION

**Documents brevets cités dans la description**

- US 6999231 B

- US 2005200946 A1

**Littérature non-brevet citée dans la description**

- Wide Waveband Infra-red Optics. *SPIE,* vol. 1013